# EUROPEAN PATENT APPLICATION

(11) **EP 3 147 237 A1**
(43) Date of publication of application: **29.03.2017**
(21) Application number: 16188701.3
(22) Date of filing: 14.09.2016
(51) Int. Cl.: B65G 1/04, B65G 1/06, B65G 1/137

(54) **SYSTEM FOR THE TEMPORARY STORAGE OF PRODUCTS SUCH AS TUBS LOADED OR NOT LOADED WITH ITEMS OF LUGGAGE**

(30) Priority: 25.09.2015 NL 2015500
(71) Applicant: Vanderlande Industries B.V., 5466 RB Veghel (NL)
(72) Inventor: Weijenberg, Gaston Joseph Anne Marie, 5466 RB VEGHEL (NL)
(74) Representative: Algemeen Octrooi- en Merkenbureau B.V.

(57) **Abstract**

The invention provides a system for the temporary storage of products. The system comprises a number of side-by-side parallel aisle units (4). Each aisle unit (4) comprises a pair of racks (5a, 5b) which are each provided with storage positions (7) arranged beside and above each other for the products, an aisle (6) between the two racks, a number of guides (8) extending above each other provided in the aisle (6), and a number of carriages (9) which are capable of movement along the guides (8). The carriages (9) are provided with exchange means for exchanging products with storage positions (7) of racks (5a, 5b). The system further comprises a lift (12, 65) for each pair (11) of two adjacent racks associated with two neighbouring aisle units (4), which lift (12, 65) comprises a lift carrier means (14, 52) which is capable of up-and-down movement. The guides (8) extend to between two neighbouring lift carrier means (14, 52). The system further comprises conveying means (21, 22, 31, 59, 60, 55) for supplying products to and discharging products from the lift carrier means (14, 52).

## Description

### Description

The present invention relates to a system for the temporary storage of products such as tubs loaded or not loaded with items of luggage. Especially at airports, but also at terminal for cruise ships, for example, there is generally a need for temporary storage of items of luggage until the moment the departure of an aeroplane or a cruise ship is at hand. It is known to make use of a so-called Early Baggage Storage (EBS) system for this purpose. In publication WO 2005/002999 A1 an example of such an EBS system is described. The system comprises detached racks, between which aisles provided with mobile lifts are present. The storage positions in each racks can be accessed from two sides, viz by the mobile lifts that are present in aisles on either side of the rack in question. In this way it is achieved that failure of a mobile lift will not result in tubs stored in storage positions becoming inaccessible, which would be highly undesirable in particular in the case of items of luggage because of the risk of a passenger having to leave without his/her luggage. Apart from the inconvenience to the passenger this also involves additional cost because of the necessary forwarding of the luggage to the passenger's destination. Although such an EBS system has been found to be reliable in practice, in the sense that it can be ensured with a high degree of certainty that any item of luggage in the system can be made available for loading onto a plane at any desired moment, there is also a wish for EBS systems which take up less space and which are of simple design, so as to save costs. In addition to that it is important that the requirements with regard to the aforesaid certainty of items of luggage being available continue to be met.

The object of the invention is to meet the aforesaid wish. In order to achieve that object, the invention provides a system according to claim 1. The invention offers a gain in space because the racks in the system are not detached but arranged adjacent to each other in pairs, with the aisles being provided between neighbouring pairs of racks. In this way a larger part of the floor space can be used for racks, making it possible to use less floor space for aisles. The storage density with which products can be stored in the system can thus be increased, so that the system requires less space. Because use is made in the system of a number of carriages for each aisle rather than of mobile lifts, failure of a carriage will in any case not result in all storage positions of racks adjacent to the aisle question becoming inaccessible. The drawback that storage positions at the level of the aisle in question are not accessible in the case of failure of a carriage is relatively limited and can in many cases be acceptable, in particular if further measures are taken such that problems with the carriage in question can be quickly solved. Because it is possible to exchange products in carriages in an aisle with the lift carrier means of two lift means on either side of the aisle, failure of a single lift will not result products on a carriage not being available, because the second lift will still be available in that case for taking over the product in question. Because each lift is moreover suitable for exchanging products with carriages in two neighbouring aisles, the amount of hardware that is required can be further reduced, so that the system can be of relatively simple design.

It is noted in passing that in European publication EP to 287093 A1 storage system is described in which use is made of lifts which, unlike the lifts of the present invention, are configured either to transfer products from the lift to a carriage in a neighbouring aisle or to receive products from a carriage in a neighbouring aisle. The lifts in question are not configured to exchange products with a carriage in an aisle, therefore, let alone with carriages in two neighbouring aisles. After all, for exchanging products it is necessary that the products can be directly transferred both from a lift to a carriage and from a carriage to a lift.

It is also noted in passing that the individual lifts of the storage system according to German publication DE 10 2011 012 42 A1 are not configured to exchange products with carriages in neighbouring aisles, either, but that they are only capable of exchanging products with a carriage in one and the same aisle.

In order to make it possible to have the exchanging of products between a lift carrier means and a carriage in a manner comparable to the exchanging of products between a carriage and a storage position, it may be preferable if the lift carrier means comprises moving means for moving a product in a horizontal direction oriented perpendicular to the longitudinal direction of the aisle between two opposite sides of the lift carrier means. The products can thus be positioned at two positions on the lift carrier means, in line with storage positions of the two adjacent racks at the first end of which the lift is provided.

In order to increase the capacity of the lift, it may generally be preferable if the lift carrier means comprises two accommodation positions, wherein each accommodation position is configured to accommodate one product. The term "accommodation position" is understood to mean a position from which it is possible to exchange a tub with the conveying means. For example, during normal operation one storage position can be used for products that must be stored in one of the racks, whilst the other storage position can be used for products that must be made available from a storage position. The two accommodation positions need not be occupied at the same time in order to achieve the aforesaid advantage.

If use is made of the aforesaid optional moving means, it may be very advantageous if the moving means are configured to move a product between the two accommodation positions.

An effective supply and discharge of products can be obtained if the conveying means comprise at least one conveyor that extends in a direction perpendicular to the longitudinal direction of the racks on the side of the lift carrier means remote from the racks.

According to a possible embodiment, at least one buffer conveyor is provided for each lift, which buffer conveyor connects to the at least one conveyor at one end and which connects to the lift carrier means at the opposite end when the lift carrier means is positioned at the same level as the at least one buffer conveyor.

In view of the aim to achieve redundancy it is advantageous if the conveying means comprise at least two conveyors, preferably not more than two conveyors. Failure of one conveyor can be met by the other conveyor.

The required amount of floor space as well as the amount of hardware can be reduced if the at least two conveyors extend directly above each other.

A very simple embodiment of the system according to the invention can be obtained if at most one and at least one buffer conveyor is provided for each lift, wherein each buffer conveyor connects to a conveyor other than the conveyor to which a buffer conveyor associated with a neighbouring lift connects. Assuming that exchanging products between a lift carrier means and the conveying means, more specifically a conveyor thereof, is only possible via said buffer conveyors, it will thus remain possible, in spite of the limited number of buffer conveyors, to ensure that products can be exchanged between a carriage and one of the at least two conveyors of the conveying means, also in case of failure of a lift. In that case it will be necessary, however, that the buffer conveyors can be driven in two opposite directions.

A suitable capacity and degree of redundancy can furthermore be achieved if at least two, preferably not more than two, buffer conveyors are provided, wherein the two buffer conveyors connect to different conveyors. In that case it may suffice if each of the buffer conveyors can be driven in only one direction, in which case it will be necessary, however, that the two buffer conveyors associated with a lift can be driven in the opposite direction.

According to an alternative embodiment, at least two, preferably not more than two, buffer conveyors are provided for each lift, wherein the two buffer conveyors connect to the same conveyor, wherein each buffer conveyor connects to a conveyor other than the conveyor to which the at least two buffer conveyors associated with a neighbouring lift connect. Since it is thus not necessary for the lift carrier means to move vertically, for example between transferring a product from a buffer conveyor and taking over a product from the buffer conveyor, it is thus possible to reduce the cycle time and increase the capacity of the system. Because the buffer conveyors associated with the respective lift carrier means connect alternately to each lift, a sufficient degree of redundancy can be guaranteed, in the sense that failure of a lift need not result in the exchange of products between a carriage and a conveyor of the conveying means becoming impossible, providing that the at least two buffer conveyors that connect to a lift are driven or at least can be driven in different directions.

The advantages of the invention can be obtained in particular if the lengths of the at least two aisle units are different from each other. This makes it possible to adapt the layout of the system to the available space and/or the available floor space.

The invention will now be explained in more detail by means of a description of two possible embodiments of a system according to the invention, in which reference is made to the following figures:
Figure 1 is a schematic top plan view of a first embodiment of a system according to the invention;
Figure 2 is a more detailed view of a part of figure 1;
Figure 3 is a schematic perspective view of a part of the system of figure 1;
Figure 4 is a schematic perspective view similar to the view shown in figure 3 of a second embodiment of the system according to the invention.

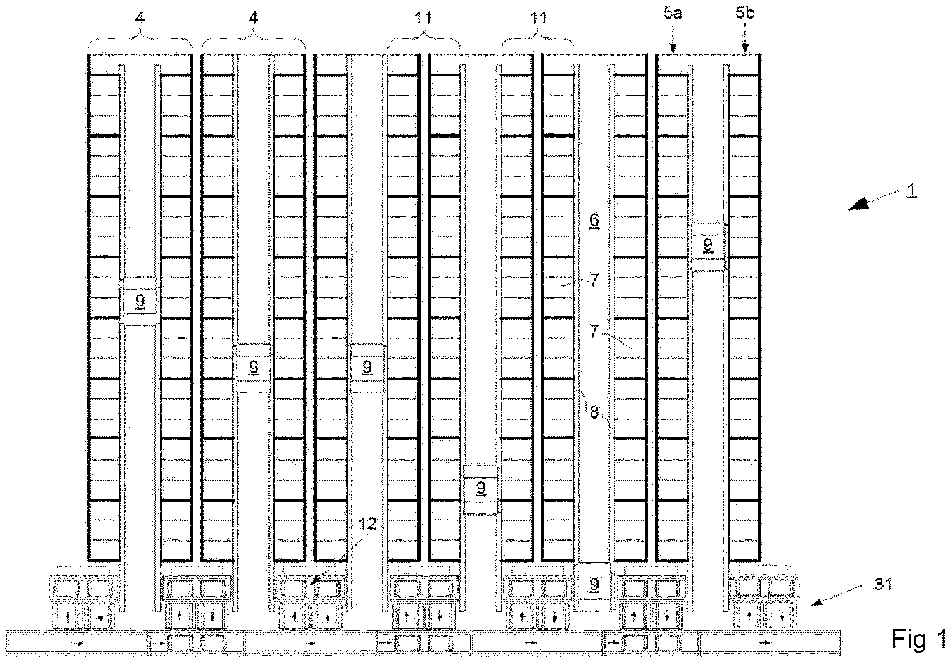

The system 1 shown in figures 1, 2 and 3 is designed for the temporary storage of so-called tubs 2, which may or may not be loaded with items of luggage 3. Such a system, which is also referred to as Early Baggage Storage (EBS) system, can typically be used at airports, in particular large airports, or in a terminal for cruise ships.

The system 1 comprises a number of side-by-side parallel aisle units 4. Each aisle unit 4 comprises two racks 5a, 5b with an aisle 6 therebetween. Each rack 5 comprises a number of layers, for example 5-10 layers with side-by-side storage positions 7 for tubs 2 that may or may not be loaded with items of luggage 3.

Each aisle unit 4 further comprises, for each layer of the racks 5, guides 8 for shuttles 9, which guides extend in the longitudinal direction of the aisle 6 between the racks 5a, 5b of each aisle unit 4. The shuttles 9 are known per se, for example from European publication EP 733563 A1; they have four running wheels 10, at least two of which are driven by at least one electric motor with which the shuttle 9 is provided. If an electric motor is provided for each of the running wheels 10, this has the advantage that no parts are needed for interconnecting the running wheels, thus saving space that can be utilised for other means.

Each shuttle 9 is capable of movement along the guides 8 at a particular level, during which movement the running wheels 10 run on the guides 8. Preferably, partially depending on the required capacity, a shuttle 9 is provided for each layer. Using a shuttle lift at one end of the guides 8 (preferably at the upper side in figure 1; not shown), it is possible to move shuttles between different levels and exchange shuttles, for example, or move them to a position where a battery of the shuttle can be recharged. It is also noted in this regard that the aisle units 4 do not necessarily need to have the same length, so that the system 1 can be optimally designed to fit the available space in the building in which the system 1 is used. In that case it will be advantageous, however, to align the ends of the aisle units 4 that are located on the sides of the lifts 12 (yet to be discussed), as is also the case in the system 1.

Each storage position 7 is accessible to a shuttle 9 that is present on one of the guides 8. To exchange a tub 2 between a storage position 7 and a shuttle 9, the shuttle 9 is provided with exchange means (not shown in detail) as known to the skilled person and as may be configured with arms that can be telescopically extended and retracted in a direction perpendicular to the longitudinal direction of the aisle 6 either for thus moving a tub from the shuttle 9 to a desired storage position 7 and transferring it thereto or for picking up a tub that is present in a storage position 7 and transferring it to the shuttle 9. The telescopic arms may furthermore be provided with pairs of conveyor belts 16a, 16b capable of supporting and conveying tubs 2.

Each storage position 7 can only be accessed from one side for exchanging tubs 2, unlike, for example, the storage positions 22 in International patent application WO 2015/002999, which storage positions 22 can be accessed from two sides for redundancy reasons. This is connected to the fact that in the system 1 the pairs 11 of racks 5a, 5b of two neighbouring aisle units 4 are positioned back to back.

A lift 12 is provided at the end of each pair 11 of racks 5a, 5b of neighbouring aisle units 4. The lift 12 comprises a vertically extending guide 13 and a lift carrier means 14, which is capable of vertical up-and-down movement along the guide 13 between the various levels of the guides 8. The guides 8 extends to beside the respective lift carrier means 14, so that a shuttle 9 can be positioned in line with a lift carrier means 14. The dimensions of the lift carrier means 14, seen in horizontal direction perpendicular to the longitudinal direction of the aisles 6, at least substantially corresponds to the joint depth of the associated pair 11 of racks 5a, 5b. On the lift carrier means 14, two accommodation positions 15a, 15b for a tub 3 are available, which accommodation positions 15a, 15b are at least substantially in line with the row of storage positions 7 associated with the respective racks 5a, 5b.

Each lift carrier means 14 is further provided with a pair of conveyor belts 17, which conveyor belts extend along the entire dimensions of the lift carrier means 14, seen in horizontal direction perpendicular to the longitudinal direction of the aisles 6. Each lift carrier means 14 further comprises a pair of conveyor belts 18 and 19 at the location of the accommodation position 15a, 15b, which conveyor belts extend between the conveyor belts of the pair 17. The conveyor belts 18, 19 are capable of up-and-down movement for exchanging a tub present at an accommodation position 15a, 15b with the conveyor belts 17.

The system 1 is further provided with conveying means. Said conveying means comprise two conveyors 21, 22, which extend along the lifts 12 and which are disposed one above the other. Each of the conveyors 21, 22 comprises pairs of conveyor belts 23 and 24, and each conveyor is configured for supplying tubs 2 to the system 1 or discharging tubs 2 from the system 1. The conveyors 21, 22 of each lift 12 are alternately provided with two pairs of conveyor belts 25 and 26, which extend between the associated belts 23 or 24, transversely thereto, and which are to a limited extent capable of up-and-down movement relative to the associated belts 23 or 24 for taking over a tub therefrom.

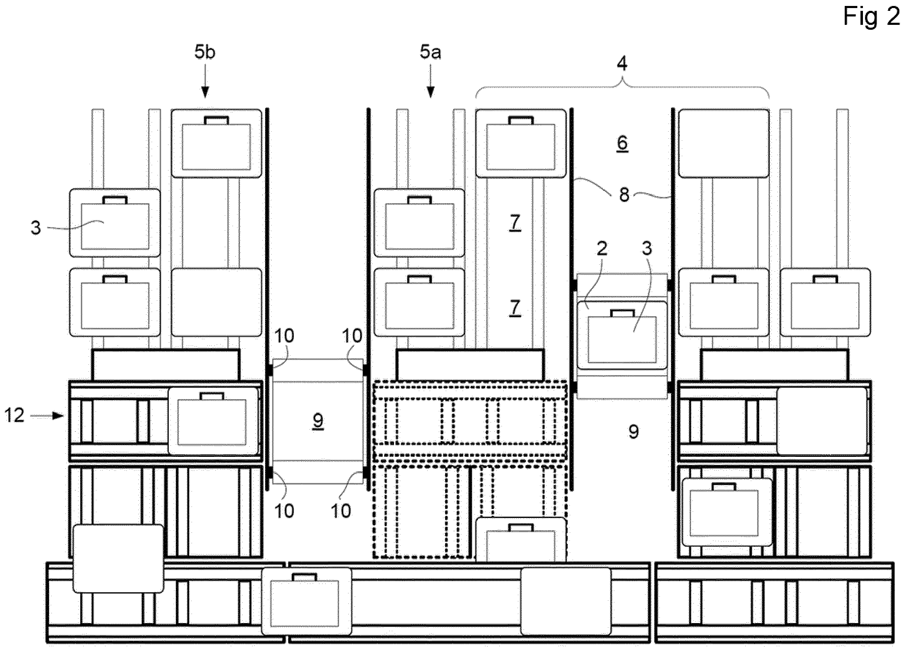

The conveying means furthermore comprise a buffer carrier means 31 for each lift 12, which buffer carrier means are each provided with two pairs of conveyor belts 32, 33, which are in line with the conveyor belts 25, 26 of the conveyors 21 and 22, respectively, and with the conveyor belts 18, 19 of the lift carrier means 17 when the latter is located at the same level as the buffer carrier means 31. Neighbouring buffer carrier means 31 are alternately provided at different levels. In figures 1, 2 these different levels are indicated by illustrating the buffer carrier means 31 alternately in full lines and in dotted lines.

The system 1 is suitable for the temporary storage of items of luggage 3 present on tubs 2 in one of the storage positions 7 with a high degree of reliability and, more importantly even, releasing a tub 2 from the storage system again at a desired moment. The tubs 2 with the items of luggage 3 present thereon are to that end supplied to the system 1 by one of the conveyors 21, 22 and taken over by the transverse conveyor belts 25, which will in turn transfer the tub to the associated conveyor belts 32 of one of the buffer carrier means 31. The lift carrier means 14 is subsequently moved to the level of the buffer carrier means 31 in question, whereupon the tub 2 is transferred to the conveyor belts 18 of the accommodation position 15a. The lift carrier means 14 then moves to the level of the layer comprising the storage position 7 in which, as determined by the control system of the system 1, the tub 2 in question is to be stored. This storage position 7 is in any case located in one of the four racks 5a, 5b of neighbouring aisle units 4, at the end of which the lift 12 in question is provided. Said storage position 7 may of course also be located at the level of the buffer carrier means 31, so that it will not be necessary to move the lift carrier means 14 vertically. The lift carrier means 14 subsequently transfers the tub 2 on one of the two guides 8 present on either side of the lift carrier means 14. This can of course only take place if the shuttle 9 is positioned beside the lift carrier means 14. The shuttle 9 then moves to a position opposite the storage position 7 in which the tub 2 is to be stored and transfers the tub 2 to that storage position, so that the shuttle 9 will be available again either for collecting a tub 2 to be released from one of the storage positions 7 on either side of the guides 8 at the level in question or for picking up a new tub 2 from a lift carrier means 14.

The releasing of a tub 2 from a storage position 7 takes place in a comparable manner: the shuttle 9 moves to a position directly opposite the storage position in question and takes over the tub 2. The shuttle 9 then moves to the end of the guides opposite the conveyors 21, 22, where it transfers the tub 2 again to one of the two lift carrier means 14 of the lifts 12 on either side of the aisle 6 in which the guide 8 in question is provided. To that end the lift carrier means 14 in question must of course have been moved to the level of the guide 8 in question. The lift carrier means 14 then positions the tub 2 at the accommodation position 15b and moves to the level of the associated buffer carrier means 31, which subsequently takes over the tub 2 from the lift carrier means 14 and in turn transfers it to the transverse conveyor belts 26 associated with one of the conveyors 21, 22. The transfer of a tub 2 from the accommodation position 15b to the conveyor belts 33 of the buffer carrier means 31 preferably takes place simultaneously with the transfer of another tub 2 from the conveyor belts 32 of the buffer carrier means 31 to the accommodation position 15a of the lift carrier means 14. The conveyors 21, 22 then carry the tub 2 forward for further processing.

In practice the aim will be to select the respective storage positions where first a tub 2 is placed and subsequently another tub 2 is collected by a shuttle 9 to be located close together, preferably directly opposite each other, so that the shuttle will hardly need to move therebetween, if at all. The system 1 is in particular reliable because failure of a component can hardly, if at all, result in the system 1 being unable to release a tub 2. Thus, failure of the conveyor belts 18, 32 or 25 can be met by the conveyor belts 19, 33 and 26, respectively, and vice versa of course. Alternatively it is also possible to divert the tubs to a neighbouring lift 12 in case of failure of one of the conveyor belts 18, 19, 23, 33, 25, 26. This has the advantage that there is no need in that case for the conveyor belts 18, 19, 23, 33, 25, 26 to be capable of being driven in two opposite directions.

Failure of a lift 12, for example in that the lift carrier means 14 cannot be moved up and down, can be met by a neighbouring lift 12, because of the fact that each guide 8 connects to two lifts 12. What is true, however, is that the consequence of failure of a shuttle can be that tubs 3 stored in storage positions that could be accessed by the shuttle 9 in question will temporarily not be accessible. Usually a relatively limited number of storage positions 7 will be involved, so that this can be acceptable. Moreover, the above-mentioned shuttle lift (not shown) makes it possible to exchange the shuttle 9 in question for a properly functioning shuttle 9 in a relatively quick manner.

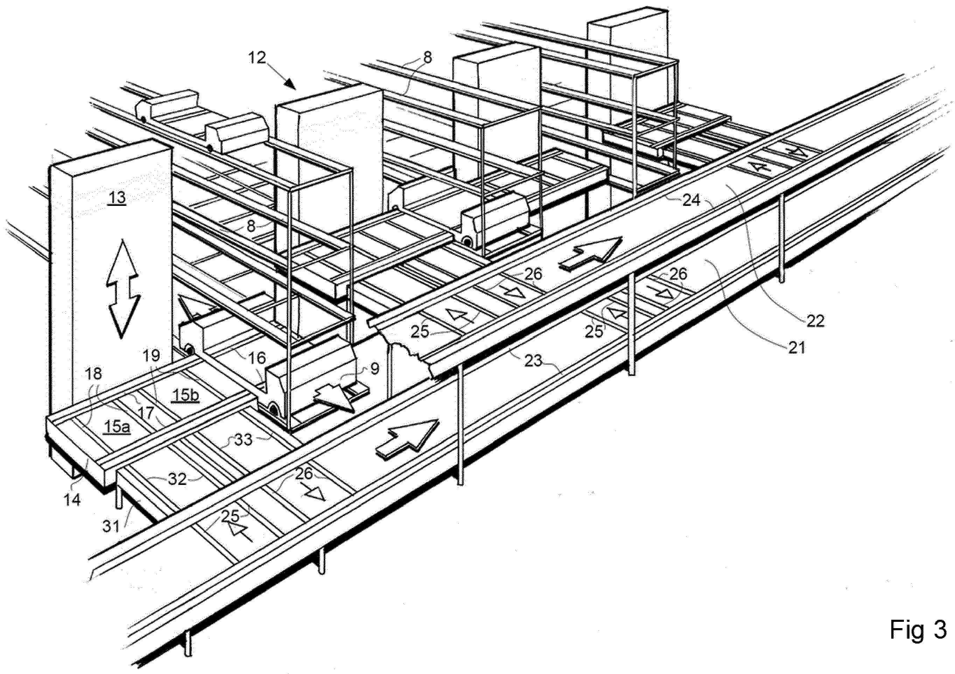

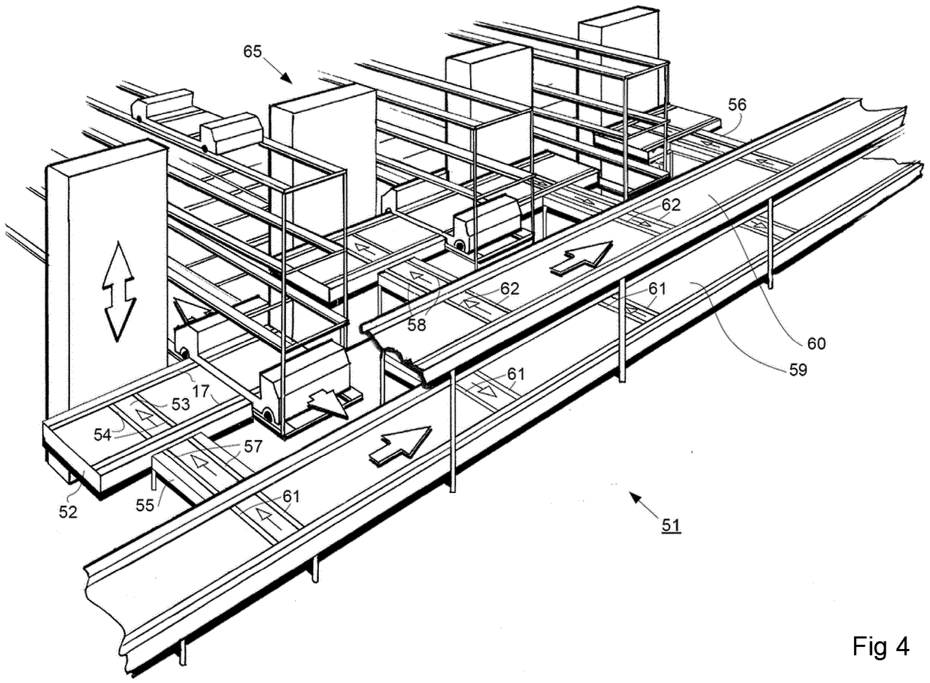

Figure 4 shows a view similar to the view of figure 3 of an alternative embodiment of a system 51 according to the invention. The system 51 is of even simpler design than the system 1. Hereinafter only those parts of the system 51 that are different from the system 1 will be discussed.

The lift carrier means 52 comprises a single accommodation position 53 with pairs of toothed belts 54. This does not imply, however, that a tub 2 can only be positioned at the accommodation position 53 in question on one lift carrier means 52. In fact this is possible at any position that admits conveyor belts 17. Two buffer carrier means 55, 56 disposed one above the other, which are provided with respective pairs of toothed belts 57, 58, are provided for each lift 65. The toothed belts 57, 58 of the two buffer carrier means 55, 56 which are disposed one above the other and which are associated with a particular lift 65 are driven in opposite directions during normal operation. The conveyors 59, 60 for each buffer carrier means 55, 56 are provided with pairs of transverse conveyor belts 61, 62. The transverse conveyor belts 61 and 62 associated with each conveyor 59, 60 are alternately driven in opposite directions, at least during normal operation.

Also in the case of the system 51 it can be guaranteed with a high degree of certainty that a tub 2 stored in a storage position can be released. Failure of a conveyor 59 can be met by the conveyor 60. Failure of a lift 65 can be met by a neighbouring lift 65. Failure of a buffer carrier means 55 can be met by the buffer carrier means 56 associated with the same lift 55, and vice versa.

Although in the foregoing the invention has been explained by means of a description of system for the temporary storage of items of luggage in tubs, the invention can also be used in other environments, such as a warehousing environment for the temporary storage of different kinds of products, such as fresh food products, in particular in containers such as crates or boxes, or the like. In particular in the case of products with a relatively short storage life it is important that the first-in first-out principle be used. The invention can also be advantageously used in such an environment, therefore, because it is capable of offering a good compromise between the required degree of redundancy and the desirability of a high storage density.

## Claims

1. A system for the temporary storage of products such as tubs loaded or not loaded with items of luggage, comprising a number of side-by-side parallel aisle units (4), each aisle unit (4) comprising a pair of racks (5a, 5b) arranged parallel to each other, which are each provided with storage positions (7) arranged beside and above each other for the products, an aisle (6) between the two racks of the pair of racks, a number of horizontal guides (8) extending above each other, which are provided in the aisle, a number of carriages (9) which are capable of movement along the guides in the aisle, which carriages are provided with exchange means for exchanging products with storage positions of racks on either side of the aisle, wherein the system further comprises a lift (12; 65) for each pair (11) of two adjacent racks associated with two neighbouring aisle units (4), which lift comprises a lift carrier means (14; 52) which is capable of up-and-down movement at a first end of the two adjacent racks and in line with at least one of the two adjacent racks, which lift carrier means is configured for exchanging products with the carriages (9) on the guides (8) associated with the two aisle units (4) of which the two racks (5) in question form part, to which end the guides extend to between two neighbouring lift carrier means (14; 52), wherein the system further comprises conveying means (21, 22, 31; 59, 60, 55) for supplying products to and discharging products from the lift carrier means.

2. A system according to claim 1, wherein the lift carrier means comprises moving means for moving a product in a horizontal direction oriented perpendicular to the longitudinal direction of the aisle between two opposite sides of the lift carrier means.

3. A system according to claim 1 or 2, wherein the lift carrier means comprises two accommodation positions, wherein each accommodation position is configured to accommodate one product.

4. A system according to claim 2 and according to claim 3, wherein the moving means are configured to move a product between the two accommodation positions.

5. A system according to any one of the preceding claims, wherein the conveying means comprise at least one conveyor that extends in a direction perpendicular to the longitudinal direction of the racks on the side of the lift carrier means remote from the racks.

6. A system according to claim 5, wherein at least one buffer conveyor is provided for each lift, which buffer conveyor connects to the at least one conveyor at one end and which connects to the lift carrier means at the opposite end when the lift carrier means is positioned at the same level as the at least one buffer conveyor.

7. A system according to claim 5 or 6, wherein the conveying means comprise at least two conveyors, preferably not more than two conveyors.

8. A system according to claim 7, wherein at most one and at least one buffer conveyor is provided for each lift, wherein each buffer conveyor connects to a conveyor other than the conveyor to which a buffer conveyor associated with a neighbouring lift connects.

9. A system according to claim 7, wherein at least two, preferably not more than two, buffer conveyors are provided, wherein the two buffer conveyors connect to different conveyors.

10. A system according to claim 9, wherein the at least two conveyors associated with a lift extend directly above each other.

11. A system according to claim 6 or 7, wherein at least two, preferably not more than two, buffer conveyors are provided for each lift, wherein the two buffer conveyors connect to the same conveyor, wherein each buffer conveyor connects to a conveyor other than the conveyor to which the at least two buffer conveyors associated with a neighbouring lift connect.

12. A system according to any one of the preceding claims, wherein a carriage is provided for each guide.

13. A system according to any one of the preceding claims, wherein the lengths of at least two aisle units are different from each other.
